# FASCICULE DE BREVET EUROPEEN

(11) **EP 0 847 580 B1**
(45) Date de publication et mention de la délivrance du brevet: **26.11.2003**
(21) Numéro de dépôt: 97929367.7
(22) Date de dépôt: 17.06.1997
(51) Int. Cl.: G11B 7/24, G11B 7/26

(54) **DISQUE OPTIQUE COMPATIBLE A DEUX SYSTEMES DE LECTURE DIFFERENTS**
MIT ZWEI VERSCHIEDENEN WIEDERGABESYSTEMEN KOMPATIBLE OPTISCHE PLATTE
OPTICAL DISK COMPATIBLE WITH TWO DIFFERENT READING SYSTEMS

(30) Priorité: 28.06.1996 FR 9608056
(43) Date de publication de la demande: 17.06.1998
(60) Demande divisionnaire: 03021459.7
(73) Titulaire: THOMSON multimedia, 92648 Boulogne Cédex (FR)
(72) Inventeur: ARTIGALAS, Max, F-92648 Boulogne Cedex (FR); THIES, Stephan, F-92648 Boulogne Cedex (FR)
(74) Mandataire: Zhang, Jianguo
(86) Numéro de dépôt international: FR9701090
(87) Numéro de publication internationale: WO98000842

(56) Documents cités:
- EP-A- 0 368 442
- EP-A- 0 520 619
- EP-A- 0 720 159
- EP-A- 0 737 966
- EP-A- 0 745 985
- WO-A-97/09716
- US-A- 3 855 426
- US-A- 5 526 338

## Description

La présente invention concerne un disque optique composé de deux disques élémentaires collés l'un contre l'autre, chaque disque élémentaire contenant au moins un substrat transparent avec une face d'informations pourvue de micro-altérations superficielles réparties selon une piste en spirale ou des pistes concentriques et destinées à être lues optiquement à raide d'un faisceau laser.

Actuellement, un nouveau standard de disque optique haute densité est en cours d'élaboration sous le nom de DVD (en anglais Digital Video Disc). Ce nouveau type de disque optique permet grâce à une technique spécifiquement développée d'avoir une capacité de stockage supérieure à 4,7 Giga Octets par face d'informations, ce qui permet de stocker au delà de deux heures de vidéo numérique compressée selon la norme MPEG2 Vidéo. La grande densité du disque optique permet également des applications dans le domaine informatique.

L'augmentation de la densité de stockage sur le disque optique a nécessité un changement de technique par rapport à la technologie du disque compact (ou CD), notamment en ce qui concerne la taille des micro-altérations sur le disque, la longueur d'onde du laser de lecture, le système de modulation et la méthode de correction d'erreurs. Il en résulte qu'a priori un lecteur du disque DVD ne permet pas de lire les disques compacts classiques.

Le disque compact fait environ 1,2 mm d'épaisseur et est constitué d'un substrat transparent comportant une face d'informations pourvue de micro-altérations sous forme de micro-cuvettes ou de micro-saillies réparties sur une piste en spirale. La face d'informations est recouverte d'une couche métallique réfléchissante qui est recouverte à son tour par une couche de protection sur la face extérieure de laquelle est ensuite apposé un label indiquant le contenu du disque. Le disque DVD est composé de deux disques élémentaires faisant chacun environ 0,6 mm d'épaisseur. Les deux disques élémentaires sont collés dos à dos, du côté de leur face d'informations respective si elle est présente, par une fine couche de colle, ce qui résulte un disque d'épaisseur environ 1,2 mm. Pour la lecture optique, l'épaisseur du substrat traversé par le faisceau laser est de 1,2 mm et de 0,6 mm respectivement pour le disque compact et pour le disque DVD.

Pour la technique du disque compact, on utilise la modulation EFM, le code de correction d'erreur CIRC et la longueur d'onde de lecture λ = 780 nm, alors que pour la technique DVD, on utilise la modulation 8/16, le code de correction d'erreur RSPC et la longueur d'onde de lecture λ=650 nm ou 635 nm. Ainsi, un lecteur conçu uniquement pour le disque DVD n'est pas compatible pour la lecture des disques compacts. Pour assurer la compatibilité ascendante permettant au lecteur DVD de lire les disques compacts, il est nécessaire d'inclure dans le lecteur DVD un ensemble électronique et une source laser dédiés à la lecture des disques compacts, ce qui augmente sensiblement le prix de tels lecteurs. En outre, si la compatibilité ascendante des lecteurs DVD permet de lire les disques compacts, il n'en est pas de même pour les lecteurs de disques compacts classiques qui ne peuvent en aucun cas lire les disques DVD, puisque de tels lecteurs ne comportent pas un ensemble électronique et un laser spécifiques pour la lecture des disques DVD.

Plusieurs solutions sont proposées dans le cadre d'un disque optique multicouche ayant des disques élémentaires (EP-A-0745985, EP-A-0737966, EP-A-0720159, WO-A-97/09716). Ces documents font partie de l'état de la technique selon l'Article 54(3) CBE. II existe également des solutions plus anciennes, par exemple EP-A-0520619 qui reflète le préambule de la revendication 1, ou US-A-3855426.

La présente invention a pour objet également de résoudre ce problème de compatibilité pour la lecture des disques compacts et des disques DVD en proposant une solution simple et économique.

L'invention propose un nouveau type de disque optique combinant les avantages des disques compacts et des disques DVD et pouvant être lu aussi bien par les lecteurs de disques compacts et les lecteurs DVD, selon la revendication 1. L'invention propose également une méthode de fabrication de ce nouveau type de disques optiques, selon la revendication 8.

Le disque optique est composé de deux disques élémentaires assemblés par collage l'un contre l'autre, chaque disque élémentaire contenant un substrat transparent avec au moins une face d'informations pourvue de micro-altérations superficielles réparties selon une piste en spirale ou des pistes concentriques et destinées à être lues à raide d'un faisceau laser. Les micro-altérations peuvent être sous forme de micro-cuvettes, de micro-saillies et/ou de sillons continus. La face d'informations du premier disque élémentaire est revêtue d'une couche semi-réfléchissante laquelle est adjacente à la couche de colle d'assemblage qui est transparente. La face d'informations du deuxième disque élémentaire est revêtue d'une couche métallique réfléchissante et est située à l'opposé de la couche de colle d'assemblage. Une couche de protection couvre ensuite la couche métallique réfléchissante du deuxième disque pour servir de support de label pour le disque. La couche semi-réfléchissante présente un coefficient de transmission supérieur ou égal à une première valeur prédéterminée pour une longueur d'onde du laser supérieure ou égale à un premier seuil. La couche semi-réfléchissante présente en outre un coefficient de réflexion supérieur ou égal à une seconde valeur prédéterminée pour une longueur d'onde du laser inférieure ou égale à un second seuil. De préférence, le premier seuil est supérieur au second seuil d'au moins 100 nm.

Avantageusement, la face d'informations du premier disque élémentaire et la face d'informations du deuxième disque élémentaire sont conforment à deux standards différents, par exemple DVD et CD.

De préférence, la première valeur prédéterminée pour le coefficient de transmission est égale à 95%. La seconde valeur prédéterminée pour le coefficient de réflexion est égale à 25%. Pour l'application du disque optique dans le cadre de la compatibilité CD et DVD, les longueurs d'ondes utilisées sont de l'ordre de 780 nm pour le premier seuil et de l'ordre de 650 nm pour le second seuil, et l'épaisseur globale du disque est de 1,2mm.

II est possible de réaliser sur la face à l'opposé de la couche métallique réfléchissante une face secondaire d'informations du deuxième disque élémentaire adjacente à la couche de colle d'assemblage. La face secondaire d'informations est revêtue d'une couche semi-transparente qui présente des caractéristiques similaires à la couche semi réfléchissante du premier disque élémentaire en fonction de la longueur d'onde du laser, et ne doit pas déteriorer sensiblement la lecture normale de la couche semi réfléchissante et de la couche réfléchissante.

L'invention sera mieux comprise à l'aide de la description détaillée de quelques modes de réalisation pris à titre nullement limitatif et illustrés par des dessins annexés, sur lesquels :
la figure 1 est une vue schématique en perspective d'un disque optique selon l'invention,
la figure 2 est une vue de détail en coupe du disque optique de la figure 1 selon un premier mode de réalisation de l'invention,
la figure 3 est une courbe caractéristique d'une couche semi-réfléchissante selon l'invention,
la figure 4 est un schéma synoptique pour la fabrication du disque selon le mode de réalisation de la figure 2,
la figure 5 est une vue de détail en coupe du disque optique de la figure 1 selon un second mode de réalisation de l'invention,
la figure 6 sont deux courbes caractéristiques d'une couche semi réfléchissante et d'une couche semi-transparente selon l'invention, et
la figure 7 est un schéma synoptique pour la fabrication du disque selon le mode de réalisation de la figure 5.

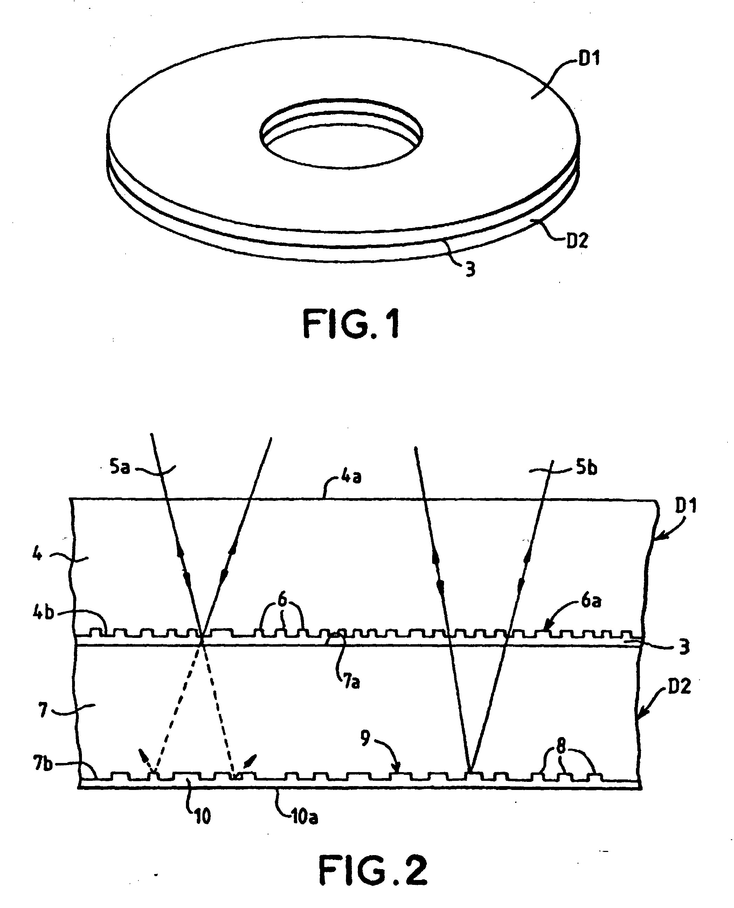

Comme illustré sur la figure 1, le disque optique de l'invention est composé de deux disques élémentaires D1 et D2 assemblés l'un contre l'autre à l'aide d'une couche de colle transparente 3. Dans la suite de la description on se réfère aux standards CD et DVD pour faciliter la compréhension de l'invention sans que cela soit limitatif pour d'autres applications ou d'autres standards de disques optiques. Dans l'application particulière pour assurer la compatibilité du disque avec les standards CD et DVD, les deux disques élémentaires D1 et D2 présentent chacun une épaisseur d'environ 0,6 mm. Le diamètre du disque optique est de 8 cm ou 12 cm. L'épaisseur totale du disque fait environ 1,2 mm.

La figure 2 illustre schématiquement la structure du disque selon un premier mode de réalisation de l'invention. Le premier disque élémentaire D1 et le deuxième disque élémentaire D2 sont assemblés l'un contre l'autre par la couche de colle transparente 3. Le disque élémentaire D1 est constitué d'une couche de substrat transparent 4 d'épaisseur environ 0,6 mm. La face supérieure 4a du substrat transparent 4 reçoit un faisceau laser de lecture 5a ou 5b. La face inférieure 4b ou face d'informations du substrat 4 comporte des micro-altérations 6 sous forme de micro-cuvettes ou de micro-saillies (connues sous le terme "pits" en anglais) et est revêtue d'une couche semi réfléchissante 6a. Les micro-altérations 6 sont réparties selon une piste en spirale ou selon des pistes concentriques. De même, le deuxième disque élémentaire D2 comporte un substrat transparent 7 dont la face supérieure 7a est collée contre la face d'informations 4b du premier disque élémentaire D1 à l'aide de la couche de colle transparente 3. La face inférieure 7b ou face d'informations du substrat transparent 7 comporte une deuxième série de micro-altérations 8 revêtues d'une couche métallique réfléchissante 9. La couche métallique réfléchissante 9 est recouverte ensuite par une couche de protection 10 dont la face extérieure 10a peut servir de support pour un label ou autres indications imprimées ou collées concernant le contenu du disque. Le deuxième disque élémentaire D2 présente une épaisseur d'environ 0,6 mm. Etant donné la faible épaisseur de la couche de colle 3, l'épaisseur globale du disque optique est environ 1,2 mm.

La face d'informations 4b du premier disque élémentaire D1 réalisée selon le standard DVD et revêtue de la couche semi réfléchissante 6a est destinée à être lue optiquement par le faisceau laser 5a avec une longueur d'onde λ=650 nm ou 635 nm. le faisceau laser 5a entre en contact avec le premier disque élémentaire D1 par la face supérieure 4a du substrat transparent 4, traverse ensuite l'épaisseur du substrat transparent 4 pour se focaliser sur la face d'informations 4b. Une partie du faisceau laser 5a est réfléchi par la couche semi réfléchissante 6a pour être lu optiquement par des photo-détecteurs (non représentés) et générer des informations par le lecteur (non représenté). Une autre partie du faisceau laser 5a traverse la couche semi-réfléchissante 6a. Si l'on néglige l'absorption du faisceau laser par la couche semi réfléchissante 6a, la somme du coefficient du transmission et du coefficient de réflexion de la couche 6a est égale à 1. Le faisceau laser 5a transmis par la couche semi-réfléchissante 6a traverse successivement la couche de colle transparente 3 et le substrat transparent 7 avant d'être réfléchi par la face d'informations 7b du deuxième disque élémentaire 2 revêtu de la coche métallique réfléchissante 9. Compte tenu de l'ouverture numérique de l'objectif du lecteur (non représenté) pour le faisceau laser 5a, la tâche lumineuse créée par la faisceau laser 5a sur la face d'informations 7b du deuxième disque élémentaire est relativement grande et défocalisée. Ainsi, le faisceau lumineux réfléchi par la couche réfléchissante 9 est fortement diffractée par la face d'informations 7b avant d'être filtré à nouveau par la couche semi réfléchissante 6a pour être ensuite renvoyé à l'extérieur du disque par la face 4a du premier disque élémentaire. Les éventuelles perturbations de lecture optique de la couche semi réfléchissante 6a sont ainsi minimisées.

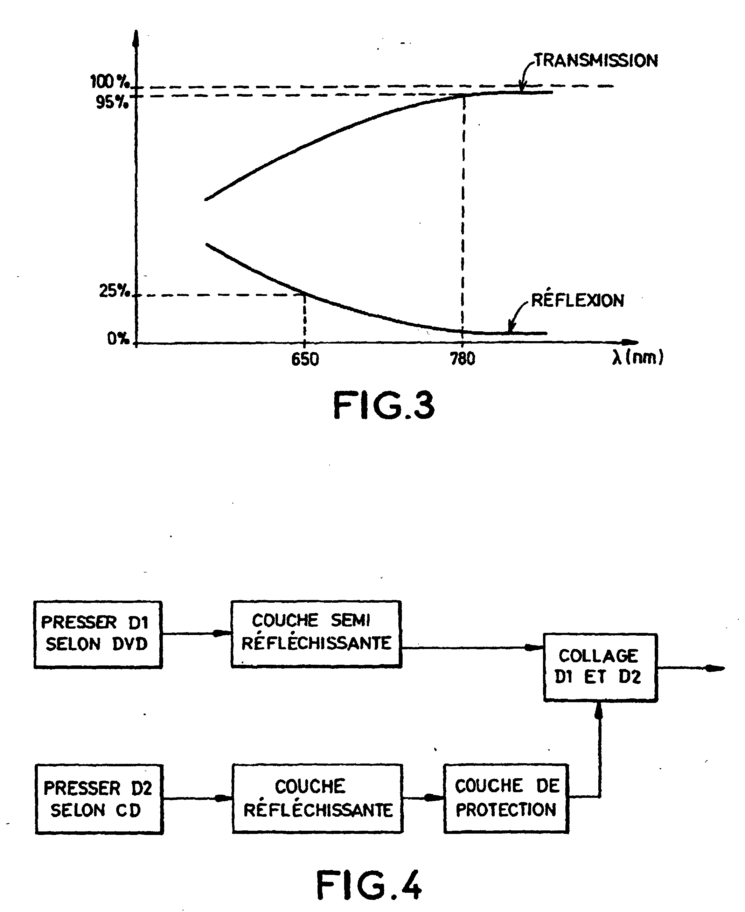

Pour la lecture de la face d'informations 7b réalisée selon le stadard CD, on utilise un faisceau laser 5b qui présente une longueur d'onde de 780 nm. Pour cette longueur d'onde, la couche semi réfléchissante 6a présente un fort coefficient de transmission pour réduire au minimum les pertes d'énergie du faisceau laser destiné à la lecture de la face d'informations 7b du deuxième disque élémentaire D2. Le faisceau laser 5b est focalisé sur la face d'informations 7b et est réfléchi par la couche métallique réfléchissante 9. Le faisceau réfléchi traverse de nouveau la couche semi réfléchissante 6a pour aller vers l'objectif du lecteur (non représenté). II importe que la présence de la couche semi réfléchissante 6a ne détériore pas la qualité de lecture optique de la face d'informations 7b. Dans la pratique, la couche semi réfléchissante 6a présente un coefficient de réflexion supérieur ou égal à 25% pour les longueurs d'onde inférieures ou égales à 650 nm et un coefficient de transmission supérieur ou égal à 95% pour des longueurs d'onde supérieures ou égales à 780 nm (voir figure 3).

La figure 4 illustre schématiquement le procédé de fabrication du disque optique selon l'invention. On réalise sur deux chaînes de production parallèles le premier disque élémentaire D1 et le second disque élémentaire D2. Le disque élémentaire D1 est réalisé par pressage d'un substrat transparent à l'aide d'un moule selon DVD standard pour façonner un substrat d'épaisseur environ 0,6 mm comportant une face d'informations selon le standard DVD. On dépose ensuite sur la face d'informations ainsi réalisée une couche semi réfléchissante. De même, le second disque élémentaire D2 est obtenu par pressage d'un substrat transparent à l'aide d'un moule pour façonner un substrat d'épaisseur environ 0,6 mm et présentant une face d'informations selon le standard CD. La couche d'informations ainsi obtenue est revêtue ensuite d'une couche métallique réfléchissante et une couche de protection. Les deux disques élémentaires D1 et D2 ainsi obtenus sont assemblés l'un contre l'autre à l'aide d'une fine couche de colle transparente, la couche semi réfléchissante étant adjacente à la couche de colle tandis que la couche réfléchissante se situe sur la face opposée à la face recevant la colle. Le disque ainsi obtenu comporte une face d'informations DVD à une profondeur de 0,6 mm et une face d'informations CD à une profondeur d'environ 1,2 mm.

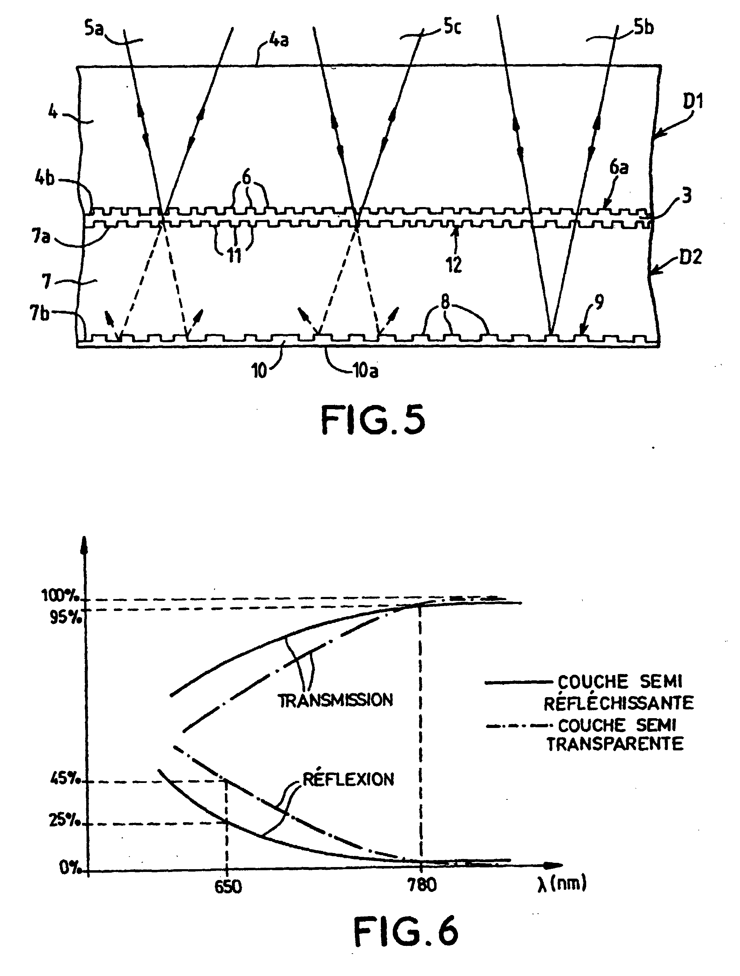

Sur la figure 5 est représenté un second mode de réalisation du disque qui diffère du premier mode de réalisation par l'adjonction d'une face secondaire d'informations 7a sur le second disque élémentaire D2. Pour le reste, le disque selon la figure 5 est en tout point comparable au disque précédemment décrit en se référant à la figure 2. On se contente ici de reprendre les mêmes chiffres de références pour désigner les mêmes éléments du disque. Seule la différence de ce second mode de réalisation par rapport au premier mode de réalisation est décrite ci-après.

La face secondaire d'informations 7a est réalisée sur la face du substrat transparent 7 adjacente à la couche de colle transparente 3 et à l'opposé de la face d'informations 7b du second disque élémentaire D2. La face secondaire d'informations 7a comporte également des micro-altérations 11 semblables à celles de la face d'informations 4b du premier disque élémentaire D1, en ce sens qu'elles sont destinées à être lues selon le standard DVD par opposition à la face d'informations 7b du second disque élémentaire D2 qui est destinée à être lue selon le standard CD. La face secondaire d'informations 7a est revêtue d'une couche semi transparente 12 qui est pratiquement transparente pour la longueur d'onde de 780 nm et qui présente un coefficient de réflexion supérieur ou égal à 45% pour les longueurs d'onde inférieures ou égales à 650 nm. En effet, si l'on considère que l'énergie du faisceau lumineux arrive au niveau des détecteurs optiques de lecteur (non représentés) devrait être supérieure ou égale à 25% de l'énergie du faisceau laser incident 5c, le coefficient de réflexion de la face d'informations 4b du premier disque élémentaire 4 pour les longueurs inférieures ou égales à 650 nm doit être supérieure ou égale à 25%. Cela signifie que le coefficient de transmission de la couche semi réfléchissante 6a est inférieur ou égal à 75%. Pour compenser cela, le coefficient de réflexion de la couche semi transparente 12 devrait être supérieur ou égal à 45%. De ce fait, le faisceau laser 5c focalisé sur la face secondaire d'informations 7a pour sa lecture présente une partie ayant traversé la couche semi transparente 12 d'énergie plus faible que par rapport au premier mode de réalisation, ce qui minimise d'avantage les perturbations liées au retour du faisceau laser réfléchi par la couche métallique réfléchissante 9 du second disque élémentaire D2.

Sur la figure 6 sont illustrées deux courbes caractéristiques de la couche semi réfléchissante 6a et de la couche semi transparence 12.

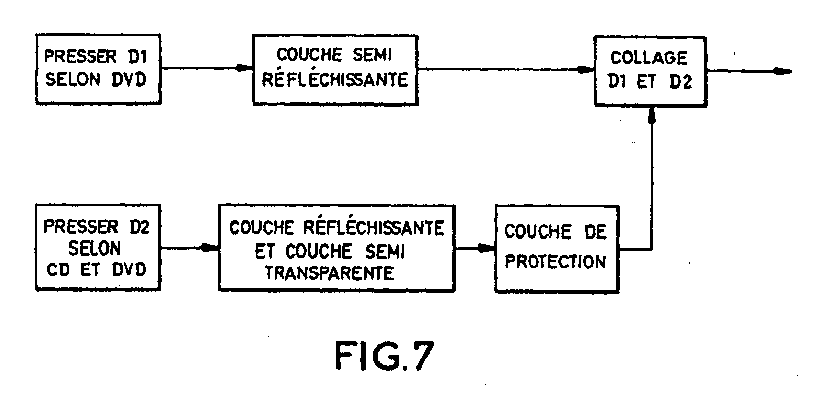

Pour réaliser le disque optique de la figure 5, on se réfère à la figure 7 qui présente les étapes de fabrication. Deux chaînes parallèles sont destinées à réaliser les disques élémentaires D1 et D2. La fabrication du disque élémentaire D1 est identique au procédé décrit pour la figure 4. Pour la fabrication du disque élémentaire D2, on presse un substrat transparent par un moule pour réaliser deux faces d'informations selon les standards DVD et CD respectivement. On dépose ensuite une couche semi transparente sur la face d'informations DVD et une couche métallique réfléchissante sur la face d'informations CD. On recouvre ensuite la couche réfléchissante par une couche de protection. Les disques élémentaires D1 et D2 ainsi réalisés sont collés ensemble par une colle transparente, les faces d'informations réalisées selon le standard DVD sont collées face à face. On réalise ainsi le disque optique qui comporte deux couches d'informations DVD et une couche d'informations CD, ce qui augmente la capacité de stockage du disque.

Pour réaliser la couche semi réfléchissante 6a et la couche semi transparente 12, on peut utiliser des matériaux tels que polydiacétylène ou polymère cholestérique (par dépôt en couche mince par exemple) dont on peut adapter le pas pour faire changer les caractéristiques de réflexion et de transmission en fonction de la longueur d'onde de lumière.

Grâce à l'invention, on peut utiliser le matériel existant pour la réalisation des disques CD et des disques DVD pour réaliser à faible coût un disque optique compatible aussi bien pour les lecteurs DVD que pour les lecteurs CD sans qu'il soit nécessaire de réaliser un lecteur DVD compatible CD. Ce nouveau type de disques permet de concilier les soucis pratiques des consommateurs concernant la compatibilité entre les disques CD et les disques DVD, et en outre de créer de nouveau marchés du disque par exemple : une musique de film ou un concert enregistré en stéréo sur la face d'informations CD et enregistré en Digital Surround Dolby AC-3 sur la face d'informations DVD; Un album audio sur la face d'informations CD et les clips vidéo associés sur la ou les faces d'informations DVD; L'intégrale des chansons d'un chanteur sur la ou les faces d'informations DVD et ses 20 chansons les plus connues sur la face d'informations CD; Un film sur la ou les faces d'informations DVD et la bande originale ou extrait de musique du film sur la face d'informations CD, etc...

## Revendications

1. Disque optique mullti-couche avec au moins deux faces d'informations (4b, 7b) pourvues de micro-altérations superficielles (6, 8) réparties selon une piste en spirale ou des pistes concentriques et destinées à être lues optiquement à l'aide d'un faisceau laser (5a, 5b), la première face d'informations (4b) étant revêtue d'une couche semi réfléchissante (6a), la deuxième face d'informations (7b) étant revêtue d'une couche métallique réfléchissante (9) **caractérisé en ce que**
le disque est composé de deux disques élémentaires (D1, D2) assemblés par collage l'un contre l'autre, le premier disque élémentaire (D1) contenant au moins un substrat transparent (4) avec la première face d'informations (4b) adjacente à la couche de colle d'assemblage (3), le deuxième disque élémentaire (D2) contenant au moins un substrat transparent (7) avec la deuxième face d'informations (7b) située à l'opposé de la couche de colle d'assemblage (3), ladite couche de colle d'assemblage (3) étant transparente, et **en ce que** le deuxième disque élémentaire (D2) comporte une face secondaire d'informations (7a) adjacente à la couche de colle d'assemblage (3) et revêtue d'une couche semi transparente (12).

2. Disque optique selon la revendication 1, **caractérisé en ce que** les faces d'informations (4b, 7b) des disques élémentaires (D1,D2) sont réalisées selon deux standards différents (CD, DVD) l'un de l'autre.

3. Disque optique selon la revendication 1 ou 2, **caractérisé en ce que** la couche semi réfléchissante (6a) présente un coefficient de transmission supérieur ou égal à une première valeur prédéterminée pour une longueur d'onde du laser supérieure ou égale à un premier seuil et un coefficient de réflexion supérieur ou égal à une seconde valeur prédéterminée pour une longueur d'onde du laser inférieure ou égale à un second seuil, le premier seuil étant supérieur au second seuil d'au moins 100 nm.

4. Disque optique selon la revendication 3, **caractérisé en ce que** la première valeur prédéterminée pour le coefficient de transmission est égale à 95% et que la seconde valeur prédéterminée pour le coefficient de réflexion est égale à 25%.

5. Disque optique selon l'une des revendications précédentes, **caractérisé en ce que** la face d'informations (4b) du premier disque élémentaire (D1) est réalisée selon le standard DVD et la face d'informations (7b) du deuxième disque élémentaire (D2) est réalisée selon le standard CD, et que les disques élémentaires présentent chacun une épaisseur d'environ 0,6 mm.

6. Disque optique selon la revendication 1, **caractérisé en ce que** la couche semi transparente (12) présente un coefficient de réflexion supérieur ou égal à 45% pour une longueur d'onde du laser inférieure ou égale au second seuil, et un coefficient de transmission supérieur ou égal à 95% pour une longueur d'onde du laser supérieure ou égale au premier seuil.

7. Disque optique selon l'une des revendications précédentes, **caractérisé en ce que** la couche semi réfléchissante (6a) du premier disque élémentaire (D1) et/ou la couche semi transparente (12) du deuxième disque élémentaire (D2) est réalisée à l'aide d'un dépôt en couche mince de polydiacétylène ou de polymère cholestérique.

8. Procédé de fabrication du disque optique multi-couche selon lequel on réalise un premier disque élémentaire (D1) par pressage d'un substrat transparent pour façonner une face d'informations selon un premier standard (DVD), la face d'informations étant revêtue d'une couche semi réfléchissante; on réalise un deuxième disque élémentaire (D2) par pressage d'un substrat transparent pour façonner une face d'informations selon un second standard (CD), la face d'informations étant revêtue d'une couche métallique réfléchissante et ensuite protégée par une couche de protection; on réalise l'assemblage des deux disques élémentaires par collage des deux disques l'un contre l'autre, la face d'informations du premier disque élémentaire étant adjacente à la couche de colle transparente, la face d'informations du second disque étant à l'opposé de la couche de colle, et pour la réalisation du deuxième disque élémentaire (D2) on presse une face secondaire d'informations sur le substrat transparent selon le premier standard (DVD), ladite face secondaire d'informations étant revêtue d'une couche semi transparente avant l'opération d'assemblage avec le premier disque élémentaire (D1).

## Patentansprüche

1. Optische Multischichtscheibe mit zumindest zwei Informationsflächen (4b, 7b), die mit oberflächlichen Mikroänderungen (6, 8) versehen sind, die entlang einer spiralförmigen Spur oder konzentrischen Spuren verteilt sind und optisch mittels eines Laserstrahls (5a, 5b) gelesen werden sollen, wobei die erste Informationsfläche (4b) mit einer halbreflektierenden Schicht (6a) und die zweite Informationsfläche (7b) mit einer reflektierenden Metallschicht (9) bedeckt ist, **dadurch gekennzeichnet, dass** die Scheibe aus zwei Elementarscheiben (D1, D2) zusammengesetzt ist, die durch Verklebung miteinander zusammengefügt werden, wobei die erste Elementarscheibe (D1) zumindest ein transparentes Substrat (4) mit der ersten Informationsfläche (4b) benachbart zu der Zusammenfügungsklebschicht (3) enthält, wobei die zweite Elementarscheibe (D2) zumindest ein transparentes Substrat (7) mit der zweiten Informationsfläche (7b) enthält, die gegenüber der Zusammenfügungsklebschicht (3) liegt, wobei die Zusammenfügungsklebschicht (3) transparent ist, und dass die zweite Elementarscheibe (D2) benachbart zu der Zusammenfügungsklebschicht (3) eine sekundäre Informationsfläche (7a) umfasst, die mit einer halbtransparenten Schicht (12) bedeckt ist.

2. Optische Scheibe nach Anspruch 1, **dadurch gekennzeichnet, dass** die Informationsflächen (4b, 7b) der Elementarscheiben (D1, D2) entsprechend zwei voneinander unterschiedlichen Standards (CD, DVD) ausgeführt sind.

3. Optische Scheibe nach Anspruch 1 oder 2, **dadurch gekennzeichnet, dass** die halbreflektierende Schicht (6a) einen Transmissionskoeffizienten größer oder gleich einem vorbestimmten ersten Wert für eine Wellenlänge des Lasers größer oder gleich einem ersten Grenzwert und einen Reflexionskoeffizienten größer oder gleich einem zweiten vorbestimmten Wert für eine Wellenlänge des Lasers kleiner oder gleich einem zweiten Grenzwert aufweist, wobei der erste Grenzwert um zumindest 100 nm größer als der zweite Grenzwert ist.

4. Optische Scheibe nach Anspruch 3, **dadurch gekennzeichnet, dass** der erste vorbestimmte Wert für den Transmissionskoeffizienten gleich 95% ist und dass der zweite vorbestimmte Wert für den Reflexionskoeffizienten gleich 25% ist.

5. Optische Scheibe nach einem der vorhergehenden Ansprüche, **dadurch gekennzeichnet, dass** die Informationsfläche (4b) der ersten Elementarscheibe (D1) entsprechend dem DVD-Standard und die Informationsfläche (7b) der zweiten Elementarscheibe (D2) entsprechende dem CD-Standard ausgeführt ist und dass die Elementarscheiben jeweils eine Dicke von etwa 0,6 mm aufweisen.

6. Optische Scheibe nach Anspruch 1, **dadurch gekennzeichnet, dass** die halbtransparente Schicht (12) einen Reflexionskoeffizienten größer oder gleich 45% für eine Wellenlänge des Lasers kleiner oder gleich dem zweiten Grenzwert und einen Transmissionskoeffizienten größer oder gleich 95% für eine Wellenlänge des Lasers größer oder gleich dem ersten Grenzwert aufweist.

7. Optische Scheibe nach einem der vorhergehenden Ansprüche, **dadurch gekennzeichnet, dass** die halbreflektierende Schicht (6a) der ersten Elementarscheibe (D1) und/oder die halbtransparente Schicht (12) der zweiten Elementarscheibe (D2) mittels einer Dünnschichtaufbringung von Polydiacetylen oder cholesterischem Polymer ausgeführt wird.

8. Verfahren zur Herstellung der optischen Multischichtscheibe, demzufolge eine erste Elementarscheibe (D1) durch Pressen eines transparenten Substrats hergestellt wird, um eine Informationsfläche gemäß einem ersten Standard (DVD) auszubilden, wobei die Informationsfläche mit einer halbreflektierenden Schicht bedeckt wird; eine zweite Elementarscheibe (D2) durch Pressen eines transparenten Substrats hergestellt wird, um eine Informationsfläche gemäß einem zweiten Standard (CD) auszubilden, wobei die Informationsfläche mit einer reflektierenden Metallschicht bedeckt wird und dann durch eine Schutzschicht geschützt wird; das Zusammenfügen der zwei Elementarscheiben durch Verkleben der zwei Scheiben miteinander erfolgt, wobei die Informationsfläche der ersten Scheibe zu der transparenten Klebschicht benachbart ist und die Informationsfläche der zweiten Scheibe gegenüber der Klebschicht liegt, und für die Herstellung der zweiten Elementarscheibe (D2) eine sekundäre Informationsfläche auf das transparente Substrat gemäß dem ersten Standard (DVD) gepresst wird, wobei die sekundäre Informationsfläche vor dem Zusammenfügungsvorgang mit der ersten Elementarscheibe (D1) mit einer halbtransparenten Schicht bedeckt wird.

## Claims

1. Multilayer optical disc with at least two information faces (4b, 7b) provided with surface micro-alterations (6, 8) distributed over a spiral track or concentric tracks and intended to be read optically with the aid of a laser beam (5a, 5b), the first information face (4b) being coated with a semi-reflecting layer (6a), the second information face (7b) being coated with a reflecting metallic layer (9), **characterized in that**
the disc is composed of two elementary discs (D1, D2) assembled by adhesive bonding to one another, the first elementary disc (D1) containing at least one transparent substrate (4) with the first information face (4b) adjacent to the assembling adhesive layer (3), the second elementary disc (D2) containing at least one transparent substrate (7) with the second information face (7b) situated opposite the assembling adhesive layer (3), the said assembling adhesive layer (3) being transparent, and **in that** the second elementary disc (D2) includes a secondary information face (7a) adjacent to the assembling adhesive layer (3) and coated with a semi-transparent layer (12).

2. Optical disc according to Claim 1, **characterized in that** the information faces (4b, 7b) of the elementary discs (D1, D2) are produced according to two mutually different standards (CD, DVD).

3. Optical disc according to Claim 1 or 2, **characterized in that** the semi-reflecting layer (6a) has a coefficient of transmission greater than or equal to a first predetermined value for a wavelength of the laser greater than or equal to a first threshold and a coefficient of reflection greater than or equal to a second predetermined value for a wavelength of the laser less than or equal to a second threshold, the first threshold being greater than the second threshold by at least 100 nm.

4. Optical disc according to Claim 3, **characterized in that** the first predetermined value for the coefficient of transmission is equal to 95% and **in that** the second predetermined value for the coefficient of reflection is equal to 25%.

5. Optical disc according to one of the preceding claims, **characterized in that** the information face (4b) of the first elementary disc (D1) is produced according to the DVD standard and the information face (7b) of the second elementary disc (D2) is produced according to the CD standard, and **in that** the elementary discs each have a thickness of around 0.6 mm.

6. Optical disc according to Claim 1, **characterized in that** the semi-transparent layer (12) has a coefficient of reflection greater than or equal to 45% for a wavelength of the laser less than or equal to the second threshold, and a coefficient of transmission greater than or equal to 95% for a wavelength of the laser greater than or equal to the first threshold.

7. Optical disc according to one of the preceding claims, **characterized in that** the semi-reflecting layer (6a) of the first elementary disc (D1) and/or the semi-transparent layer (12) of the second elementary disc (D2) is produced with the aid of a thin-layer deposition of polydiacetylene or of cholesteric polymer.

8. Process for manufacturing the multilayer optical disc according to which a first elementary disc (D1) is produced by pressing a transparent substrate so as to fashion an information face according to a first standard (DVD), the information face being coated with a semi-reflecting layer; a second elementary disc (D2) is produced by pressing a transparent substrate so as to fashion an information face according to a second standard (CD), the information face being coated with a reflecting metallic layer and then protected by a protective layer; and the two elementary discs are assembled by adhesively bonding the two discs one to the other, the information face of the first elementary disc being adjacent to the transparent adhesive layer and the information face of the second disc being opposite the adhesive layer, and for the production of the second elementary disc (D2), a secondary information face is pressed on the transparent substrate according to the first standard (DVD), the said secondary information face being coated with a semi-transparent layer before the operation of assembling with the first elementary disc (D1).
